# EUROPEAN PATENT SPECIFICATION

(11) **EP 0 824 050 B1**
(45) Date of publication and mention of the grant of the patent: **06.12.2000**
(21) Application number: 97113060.4
(22) Date of filing: 30.07.1997
(51) Int. Cl.: B23D 77/04

(54) **Boring tool with insert and guiding pads having rounded-off apexes**
Bohrer mit Schneideinsatz und Führungsleisten, welche abgerundete Spitzen aufweisen
Alésoir avec plaquette et listons de guidage, ayant les pointes arrondies

(30) Priority: 13.08.1996 IT MI960576 U
(43) Date of publication of application: 18.02.1998
(73) Proprietor: MAPAL ITALIA S.r.l., Milano (IT)
(72) Inventor: Chindemi, Domenico, 20021 Bollate (IT)
(74) Representative: Lecce, Giovanni

(56) References cited:
- EP-A- 0 350 389
- DE-A- 4 202 751
- DE-A- 4 320 511
- FR-A- 2 207 772
- GB-A- 2 244 440

## Description

The present invention relates to a borer provided with a multi-cutting insert. More particularly, the present invention relates to a borer provided with a multi-cutting insert especially suitable for carrying out high speed workings.

As is known, for the finishing of dead and through-holes of elements from metals, a specific tool is utilised - generally known as a borer - comprising a substantially cylindrical body whose external diameter corresponds to the diameter of the hole to be obtained. Said substantially cylindrical body is provided at the front with one or more inserts or cutting elements from a special high resistance metal alloy, whose edge, which gets in touch with the surface to be worked, has a cutting profile that protrudes in such a way as to remove the excess metal to a prefixed extent. The cutting element is located and blocked in a seat defined by a so-called cartridge, integral with the front part of the cylindrical body. In the tools of the known art, the cutting element is guided by sliding blocks having mouths defined by planes inclined relatively to the axis, at a progressively increasing angle. Said sliding guide-blocks are connected to the cylindrical body by means of screws, welding or the like. Such a borer is known from GB-A-2 244 440. Said borer has the features of the preamble of claim 1. The cutting elements with mouths, used for instance for the realisation of high speed precision holes with low roughness, must be used at a reduced speed, of the order, by way of example, of 100 m/min on steel, and with slightly higher values on light alloys. The speed limit is due to the fact that traditional mouths cause high radial strains that give rise to vibrations.

The utilisation of the tools at higher speeds would lead to vibrated worked surfaces, and create microchippings on the cutting edge of the element.

Object of this invention is to obviate the aforementioned drawback.

More particularly, object of this invention is to realise a borer with a multi-cutting insert, suitable to be used in high speed bore working, without running the risk of obtaining vibrated surfaces or of deteriorating the cutting edge.

A further object of this invention is to obtain a borer such as to ensure a high level of resistance and reliability in the time, and also such as to be easily and economically realisable.

According to this invention, these and still other objects are achieved by a borer with a multi-cutting insert as defined in claim 1.

The construction and working characteristics of the borer with a multi-cutting insert of the invention will be better understood thanks to the following description wherein reference is made to the attached drawings which represent a preferred non limiting embodiment, and wherein:
Figure 1 shows a schematic side view of the borer,

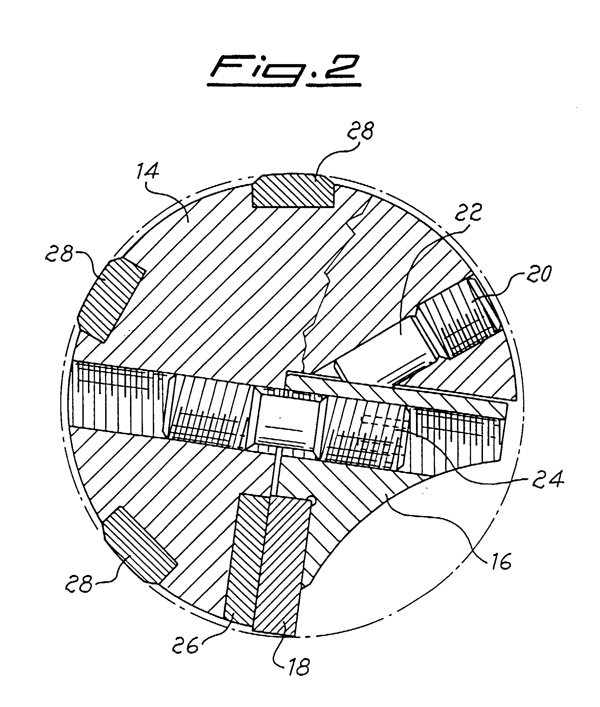

Figure 2 shows a schematic view of a cross-section of the borer of Figure 1.

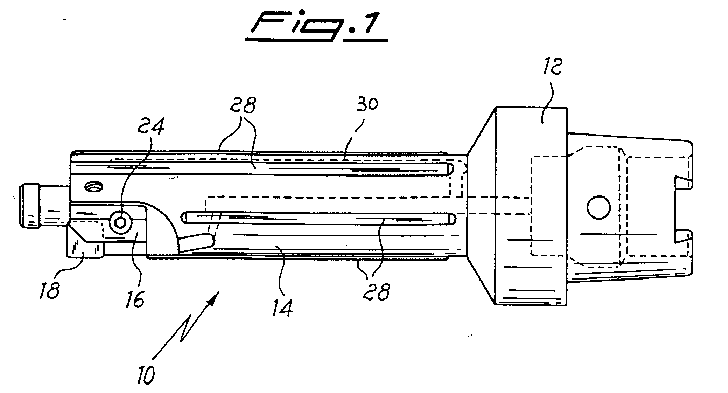

With reference to said figures, the borer with a multi-cutting insert, indicated as a whole by the numeral 10 in Figure 1, comprises a substantially cylindrical body 12 extended at the front forming a steam or head 14, carrying at the free front end a cartridge for a cutting insert or element 18. Body 12 is the portion intended for the fitting of the tool into the corresponding seat of the machine tool, and its size and shape may be varied according to the type of machine tool used.

Head 14 is provided with conventional lubrication openings 30, and has a plurality of spaced guide-strips 28, extended longitudinally. Borer 10 is also provided with means for adjusting and blocking the cutting element 18, comprising for instance a dowel 20 co-operating with a pusher 22 and a locking screw 24. The cutting element 18, housed in cartridge 16, is preferably devoid of mouths, i.e. of plane inclined relatively to the axis with a progressively increasing inclination, and has the four apexes rounded off with cutting radiuses; the value of said radiuses is preferably comprised between 0.4 and 0.16 mm.

Correspondingly, the guide-strips 28 have rounded off apexes with a radius at least equal to the radius of the cutting element; said rounded off apexes are back-placed on the longitudinal axis, relatively to the cutting element (18) by a length preferably comprised between 0.2 and 0.5 mm. The guide-strips 28 have a very high mechanical resistance, high resistance to abrasion and high tenacity; said strips are made from very high hardness materials, such as carbides, cermet, nitrides, ceramics or from materials that comply with the above requirements.

Between the cutting element 18 and head 4 there is inserted a plate-shaped support 26, from a high hardness material, such as for instance metal carbide, to prevent head 14 from being also damaged, in case of damage to the cutting element 18. According to a preferred embodiment, the cutting element 18 has a parallelepiped configuration and is advantageously provided with double cutting edges on the opposite faces relatively to the cutting radiuses. Such cutting element 18 is made from materials of the type of hard metals, cermet, either with or without surface covering applied by means of known methods (PVD or CVD), other materials of the type of ceramics, nitrides, polycristalline materials, or also those materials of a known methodology, that show a remarkable resistance to abrasion and high tenacity.

It has been experimentally found that, the tool can work at speeds much higher than those of conventional tools, reaching values of up to 200 m/min, and obtaining, in spite of this, non vibrated worked surfaces thanks to the presence of cutting radiuses on the working insert, as well as of corresponding radiuses back-placed on the guide-strips.

## Claims

1. A borer (10) with a multi-cutting insert, comprising:
- a substantially cylindrical body (12), forming a stem or head (14) having a free front, said body (12) being provided with lubricating openings (30);
- a cartridge (16) located at the free front end of said stem or head (14);
- a cutting insert (18) fixed in said cartridge (16);
- means (20, 22, 24) for adjusting and blocking said cutting insert (18);
- a plurality of spaced guide-strips (28), having apexes on their front ends, provided on said stem or head (14), the apexes of said guide-strips (28) being back-placed with respect to the cutting insert (18) along the longitudinal axis of the borer;
characterized in that the cutting insert (18) has the apexes rounded off according to a cutting radius, and in that the guide-strips (28) have also the apexes rounded off with a radius having a value at least equal to the cutting radius of the cutting insert (18).

2. The borer according to claim 1, characterized in that the radius of the rounded off apexes of the cutting insert (18) is comprised between 0.4 and 0.16 mm.

3. The borer according to claim 1 or 2, characterized in that the apexes of the guide-strips (28) are back-placed with respect to the cutting insert (18) along the longitudinal axis of the borer by a length comprised between 0.2 and 0.5 mm.

4. The borer according to anyone of the preceding claims, characterized in that a plate-shaped support (26) is located between the cutting insert (18) and the head (13).

5. The borer according to claim 4, characterized in that the plate-shaped support (26) is made from a high hardness material.

6. The borer according to the preceding claim 4 or 5, characterized in that the plate-shaped support (26) is made from metal carbide.

7. The borer according to anyone of the preceding claims, characterized in that the cutting insert (18) has a parallelepiped shape and it is provided with double cutting edges on the opposite faces with respect to the cutting radiuses.

8. The borer according to anyone of the preceding claims, characterized in that the cutting insert (18) is made from materials of the type of hard metal, cermet, the same materials with surface covering applied by PVD or CVD methods, ceramics, nitrides or polycristalline materials.

9. The borer according to anyone of the preceding claims, characterized in that the guide strips (28) are made from materials having high mechanical resistance, high resistance to abrasion and high tenacity of the type of carbides, cermet, ceramics or nitrides.

10. The borer according to anyone of the preceding claims, characterized in that the means for adjusting and locking the cutting insert (18) comprises a dowel (20) co-operating with a pusher (22) and a locking screw (24).

## Patentansprüche

1. Bohrer (10) mit einem mehrschneidigem Einsatz, umfassend:
- einen im wesentlichen zylindrischen Körper (12), der einen Stamm oder Kopf (14) mit einer freien Vorderseite bildet, wobei der Körper (12) mit Schmierungsöffnungen (30) versehen ist;
- eine Kartusche (16), die an dem freien vorderen Ende des Stammes oder Kopfes (14) angeordnet ist;
- einen Schneideinsatz (18), der in der Kartusche (16) befestigt ist;
- Mittel (20, 22, 24) zum Einstellen und Blockieren des Schneideinsatzes (18);
- eine Vielzahl beabstandeter Führungsstreifen (28) mit Scheiteln an deren vorderen Enden, die auf dem Stamm oder Kopf (14) vorgesehenen sind, wobei die Scheitel der Führungsstreifen (28) gegenüber dem Schneideinsatz (18) entlang der Längsachse des Bohrers zurückversetzt sind;
- dadurch gekennzeichnet, daß der Schneideinsatz (18) gemäß einem Schneidradius abgerundete Scheitel aufweist, und dadurch, daß die Führungsstreifen (28) ebenfalls mit einem Radius, dessen Wert mindestens gleich dem des Schneidradius des Schneideinsatzes (18) ist, abgerundete Scheitel aufweisen.

2. Bohrer gemäß Anspruch 1, dadurch gekennzeichnet, daß der Radius der abgerundeten Scheitel des Schneideinsatzes (18) zwischen 0,4 und 0,16 mm ist.

3. Bohrer gemäß Anspruch 1 oder 2, dadurch gekennzeichnet, daß die Scheitel der Führungsstreifen (28) gegenüber dem Schneideinsatz (18) entlang der Längsachse des Bohrers um eine Länge zwischen 0,2 und 0,5 mm zurückversetzt sind.

4. Bohrer gemäß einem der vorhergehenden Ansprüche, dadurch gekennzeichnet, daß eine plattenförmige Auflage (26) zwischen dem Schneideinsatz (18) und dem Kopf (13) angeordnet ist.

5. Bohrer gemäß Anspruch 4, dadurch gekennzeichnet, daß die plattenförmige Auflage (26) aus einem Material hoher Härte hergestellt ist.

6. Bohrer gemäß den vorhergehenden Ansprüchen 4 oder 5, dadurch gekennzeichnet, daß die plattenförmige Auflage (26) aus Metallkarbid hergestellt ist.

7. Bohrer gemäß einem der vorhergehenden Ansprüche, dadurch gekennzeichnet, daß der Schneideinsatz (18) die Form eines Parallelflachs hat und mit doppelt schneidenden Kanten an den gegenüberliegenden Seiten in Bezug auf die Schneidradien versehen ist.

8. Bohrer gemäß einem der vorhergehenden Ansprüche, dadurch gekennzeichnet, daß der Schneideinsatz (18) aus Materialien der Art wie Hartmetall, Cermet, den selben Materialien mit durch PVD- oder CVD-Verfahren aufgetragenen Oberflächenbeschichtungen, Keramik, Nitride oder polykristalline Materialien hergestellt ist.

9. Bohrer gemäß einem der vorhergehenden Ansprüche, dadurch gekennzeichnet, daß die Führungsstreifen (28) aus Materialien mit hoher mechanischer Widerstandsfähigkeit, hoher Widerstandsfähigkeit gegen Abrasion und hoher Festigkeit von der Art wie Karbide, Cermet, Keramik oder Nitride hergestellt sind.

10. Bohrer gemäß einem der vorhergehenden Ansprüche, dadurch gekennzeichnet, daß die Mittel zum Einstellen und Blockieren des Schneideinsatzes (18) einen Paßstift (20) umfassen, der mit einem Vordrücker (22) und einer Halteschraube (24) zusammenarbeitet.

## Revendications

1. Alésoir (10) à plaquette rapportée coupante multiple, comportant :
- un corps sensiblement cylindrique (12), formant une tige ou une tête (14) ayant une face avant libre, ledit corps (12) étant pourvu d'ouvertures (30) de lubrification ;
- un cartouche (16) placée à l'extrémité avant libre de ladite tige ou tête (14) ;
- une plaquette rapportée coupante (18) fixée dans ladite cartouche (16) ;
- des moyens (20, 22, 24) pour le réglage et le blocage de ladite plaquette rapportée coupante (18) ;
- plusieurs listels espacés (28) de guidage ayant des sommets sur leurs extrémités avant, prévus sur ladite tige ou tête (14), les sommets desdits listels (28) de guidage étant placés en arrière par rapport à la plaquette rapportée coupante (18) le long de l'axe longitudinal de l'alésoir ;
caractérisé en ce que les sommets de la plaquette rapportée coupante (18) sont arrondis suivant un rayon de coupe, et en ce que les sommets des listels de guidage (28) sont également arrondis suivant un rayon ayant une valeur au moins égale au rayon de coupe de la plaquette rapportée coupante (18).

2. Alésoir selon la revendication 1, caractérisé en ce que le rayon des sommets arrondis de la plaquette rapportée coupante (18) est compris entre 0,4 et 0,16 mm.

3. Alésoir selon la revendication 1 ou 2, caractérisé en ce que les sommets des listels de guidage (28) sont placés en arrière par rapport à la plaquette rapportée coupante (18) le long de l'axe longitudinal de l'alésoir d'une longueur comprise entre 0,2 et 0,5 mm.

4. Alésoir selon l'une quelconque des revendications précédentes, caractérisé en ce qu'un support (26) en forme de plaque est placé entre la plaquette rapportée coupante (18) et la tête (13).

5. Alésoir selon la revendication 4, caractérisé en ce que le support (26) en forme de plaque est formé d'une matière à haute dureté.

6. Alésoir selon la revendication précédente 4 ou 5, caractérisé en ce que le support (26) en forme de plaque est formé d'un carbure métallique.

7. Alésoir selon l'une quelconque des revendications précédentes, caractérisé en ce que la plaquette rapportée coupante (18) présente la forme d'un parallélépipède et est pourvue d'arêtes coupantes doubles sur les faces opposées par rapport aux rayons de coupe.

8. Alésoir selon l'une quelconque des revendications précédentes, caractérisé en ce que la plaquette rapportée coupante (18) est formée de matières du type d'un métal dur, d'un cermet, les mêmes matières avec des revêtements de surface appliqués par des procédés PVD ou CVD, des céramiques, des nitrures ou des matières polycristallines.

9. Alésoir selon l'une quelconque des revendications précédentes, caractérisé en ce que les listels (28) de guidage sont de matières ayant une haute résistance mécanique, une haute résistance à l'abrasion et une haute ténacité, du type des carbures, cermet, céramiques ou nitrures.

10. Alésoir selon l'une quelconque des revendications précédentes, caractérisé en ce que les moyens pour régler et bloquer la plaquette rapportée coupante (18) comprennent un goujon (20) coopérant avec un poussoir (22) et une vis (24) de blocage.
